# EUROPEAN PATENT SPECIFICATION

(11) **EP 4 286 796 B1**
(45) Date of publication and mention of the grant of the patent: **30.07.2025**
(21) Application number: 23174064.8
(22) Date of filing: 17.05.2023
(51) Int. Cl.: G01C 21/34, G08G 1/00, G05D 1/00, G06Q 10/02, G06Q 10/047, G06Q 10/0631, G06Q 50/40

(54) **OPERATION SYSTEM FOR ELECTRIC PERSONAL MOBILITY VEHICLES**
BETRIEBSSYSTEM FÜR ELEKTROMOBILE
SYSTÈME DE FONCTIONNEMENT POUR VÉHICULES DE MOBILITÉ PERSONNELLE

(30) Priority: 01.06.2022 JP 2022089746
(43) Date of publication of application: 06.12.2023
(73) Proprietor: Suzuki Motor Corporation, Hamamatsu-shi, Shizuoka 432-8611 (JP)
(72) Inventor: SHIBATA, Kengo, HAMAMATSU-SHI, 432-8611 (JP)
(74) Representative: Plasseraud IP

(56) References cited:
- EP-A1- 3 848 674
- US-A1- 2015 199 619
- US-A1- 2022 005 358

## Description

### [Technical Field]

The present invention relates to a small electric vehicle that is permitted to travel on sidewalks, and to an operation system for a small electric vehicle including a self-driving mode and a manual driving mode.

### [Background Art]

Small electric vehicles (personal mobility vehicles) such as mobility scooters and electric wheelchairs are treated as pedestrians under the law if they satisfy regulations for speed, vehicle body size, and the like, and travel in pedestrian traffic zones such as sidewalks and roadside strips instead of roadways. For such small electric vehicles, in addition to manual driving according to operations by an occupant, investigation is underway to enable self-driving, in which the vehicle follows a predetermined route using sensor information, map information, and location information obtained by positioning means (see, Patent Literature 1, for example).

Patent Literature 2 and 3 disclose operation systems for autonomous personal mobility vehicles that may pick up a passenger and self-drive to a target location.

### [Citation List]

### [Patent Literature]

[Patent Literature 1] JP 2019-215699 A
[Patent Literature 2] US 2022/005358 A1
[Patent Literature 3] US 2015/199619 A1

### [Summary of Invention]

### [Problems to be Solved by the Invention]

By including a self-driving function in a small electric vehicle that is permitted to travel on sidewalks, not only autonomous driving by manned self-driving but also dispatching and returning (retrieving) by unmanned self-driving are possible, which are expected to be used for automatic transportation services and the like. However, unlike the case of ordinary vehicles that travel on roadways with a standardized road structure, various challenges exist in relation to enabling self-driving for the case of small electric vehicles that travel on sidewalks.

For example, in the case of ordinary vehicles, the travel lane of the road is fixed regardless of self-driving or manual driving, and thus, in the case of providing an automatic transportation service, the route is simply planned so that the pick-up/drop-off position for passengers is at the edge of the road on the travel lane (left lane) side. However, in the case of a sidewalk-traveling vehicle like an electric wheelchair, manual driving enables the occupant to select whether to travel on the sidewalk adjacent to the left side or the right side of the road. In addition, while traveling on the right side of the road is recommended for roads without a sidewalk, there are no laws prohibiting this.

However, when providing an automatic transportation service using an electric wheelchair, the obligation and responsibility for travel lies with the service provider, who is required to comply with the mobility regulations in (1) through (4) below.
(1) For roads with a sidewalk, travel on the sidewalk (reversing is discouraged)
(2) For roads with a roadside strip but no sidewalk, travel on the right-hand roadside strip (reversing prohibited)
(3) For roads without a sidewalk or a roadside strip, travel on the right edge of the road (reversing prohibited/U-turn to the left-edge side discouraged)
(4) When turning right or left at an intersection connecting to a narrower route, space and turnaround time for turnaround are required (turnarounds on narrow roads that require so much time that they would impede the flow of other traffic are discouraged).

Also, in the case of unmanned self-driving, the treatment is similar to an automated delivery robot for the delivery and pickup of goods, and the vehicle is considered to be a sidewalk-traveling vehicle similar to an electric wheelchair robot, subject to the condition of being remotely monitored. However, considering the impact on the movement of surrounding pedestrians and the like, actions which are discouraged in manned driving, such as reversing on sidewalks, are difficult to implement from the standpoint of providing an automatic transportation service.

Consequently, when dealing with navigation for self-driving wheelchairs, issues like the following need to be addressed, and it is difficult to propose an optimal mobility service using conventional route planning and navigation methods that assume a conventional motor vehicle or a manually driven electric wheelchair.
(a) There is a need to consider a space for passing by other pedestrians and the like.
(b) There is a need to consider a space for passing by bicycles and the like.
(c) To pick up users waiting to be picked up on the left side of the road, a circle-around or detour of the route via both sides of the sidewalk adjacent to the left and right edges of the road is required.
(d) When the destination point is on the left side of the road, including transfers to buses and other vehicles (such as bus stops and taxi waiting areas), a circle-around or detour of the route via both sides of the sidewalk is required.

In particular, if a route is generated as-is in response to (c) and (d) above, there is a concern that the user will feel uncomfortable from incorrectly thinking that the self-driving wheelchair, which is circling around or taking a detour in the travel segment, will pass by the destination point without noticing, or that the user (occupant) will cancel self-driving unexpectedly or drop-off unexpectedly and abandon the electric wheelchair.

Accordingly, investigation is underway to make it possible to increase the selection possibilities for traffic patterns and avoid circling around and the like by generating a route using, in combination, dispatching by unmanned self-driving, manned self-driving, and manual driving by the user, and by changing the pick-up location. Furthermore, presenting a change of pick-up location may impose a psychological burden if the user is unfamiliar with the location. Moreover, if the location is in an area with poor visibility or after sunset, it is anticipated that the user may have trouble finding the unmanned vehicle.

The present invention has been devised in the light of the above points, and an object thereof is to provide an operation system for a small electric vehicle that is advantageous for lessening the burden of meeting up with a vehicle dispatched by unmanned self-driving at a pick-up location.

### [Means for Solving the Problems]

To solve the above problems, the present invention is defined by the operation system for an electric personal mobility vehicle as presented in the independent claim 1.

### [Advantageous Effect of Invention]

As above, the operation system for a small electric vehicle according to the present invention can use the meeting support function that gives notice of arrival to the user communication terminal when the vehicle is driven by unmanned driving on the first travel route (dispatch route) and arrives at the pick-up location for the user, thereby lessening the burden of meeting up with the small electric vehicle dispatched by unmanned self-driving at the pick-up location, and is advantageous for providing an automated transportation service.

### [Brief Description of Drawings]

[Figure 1] Figure 1 is a block diagram illustrating an operation system for a small electric vehicle.
[Figure 2] Figure 2 is a block diagram illustrating a control system of the small electric vehicle.
[Figure 3] Figure 3 is a schematic diagram for explaining a basic concept of a route search.
[Figure 4] Figure 4 is a flowchart illustrating a flow of route generation and mobility plan presentation in the operation system for a small electric vehicle according to the embodiment of the present invention.
[Figure 5] Figure 5 is a flowchart illustrating a flow of dispatching and route traveling in the operation system for a small electric vehicle according to the embodiment of the present invention.
[Figure 6] Figure 6 is a map in which nodes and links have been set in a traffic zone of the small electric vehicle.
[Figure 7] Figure 7 is a map to which nodes for a departure point, a pick-up point, and a drop-off point have been added.
[Figure 8] Figure 8 is a map displaying base routes generated on the assumption of self-driving only.
[Figure 9] Figure 9 is a map displaying an alternative route including manual driving switchover.
[Figure 10] Figure 10 is a map displaying an alternative route including manual driving switchover and pick-up point change.
[Figure 11] Figure 11 is a map displaying an alternative route including a change considering infrastructure information.
[Figure 12] Figure 12 is a map of the area near a pick-up point, on which a small electric vehicle and a user are displayed.

### [Mode for Carrying Out the Invention]

Hereinafter, an embodiment of the present invention will be described in detail and with reference to the drawings.

### 1. Basic configuration of system

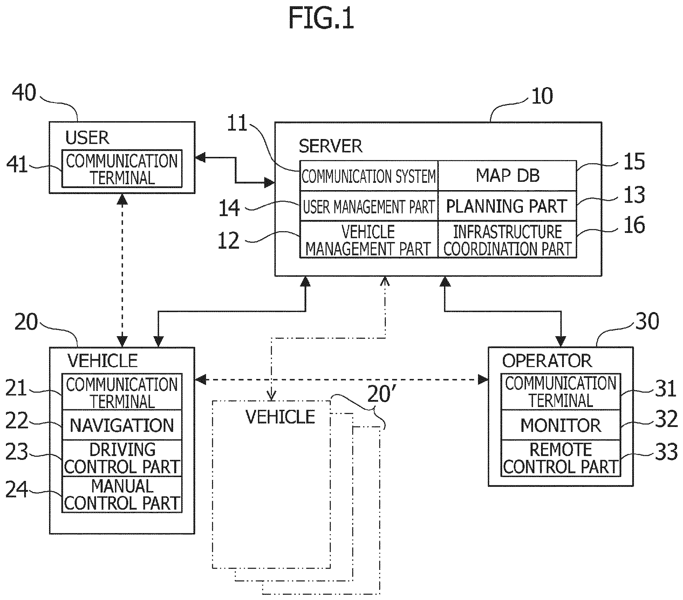

In Figure 1, an operation system for a small electric vehicle according to the embodiment of the present invention includes at least one small electric vehicle 20 (hereinafter also simply referred to as a vehicle 20 in some cases), an operation server 10 for managing and operating the vehicle 20, an operator 30 (operator interface), and at least one user 40 (user communication terminal 41; client). In the following description, a case in which one of each exists is described for convenience, but in actual operations, it is anticipated that a large number of small electric vehicles 20 (20') will be registered in the operation server 10 and, although fewer in number, a plurality of operators 30 and a plurality of user terminals 40 will simultaneously connect to the operation server 10.

The operation server 10 is provided with a communication system 11, a vehicle management part 12, a user management part 14, a planning part 13, a map database 15, and an infrastructure coordination part 16, and is configured by hardware including at least one computer and software running on the computer.

The communication system 11 is implemented as a fixed communication terminal permanently connected to a communication network provided by a telecommunications carrier, enabling the client (user terminal 41) to connect to the operation server 10 over the Internet and/or a mobile communication network and utilize a service through data communication, and also enabling the operation server 10 to connect to a communication terminal 21 of the vehicle 20 over the Internet and a mobile communication network, and remotely manage and operate the system of the vehicle 20.

The vehicle management part 12 is a database with which the operation server 10 manages the registered small electric vehicle 20 (20'), individually stores information groups such as an ID of the vehicle, model information, registered station, status (such as standing by on full charge, preparing to dispatch, be dispatched, self-driving, manual driving, returning, waiting for retrieval, retrieving, and charging), battery power (SOC), battery state of health (SOH), using user ID, presented plan (travel route) information, and operation history, and is provided to enable efficient management and operation of each vehicle 20 (20') by the operation server 10.

The user management part 14 is a database for managing a user who connects to and is registered with the operation server 10 (registered user; hereinafter, unless specifically noted otherwise, a user denotes such a registered user), individually stores information groups such as a user ID, authentication information, registered terminal information, reservation information, usage information, and a usage history, and is to enable efficient management and operation by the operation server 10.

The map database 15 (map system) has a layered structure consisting of: road map data for display, which is a general road map with expanded data relating to pedestrian traffic zones such as sidewalks, roadside strips, crosswalks, and entrances and exits of parks and facilities; text data corresponding to names and the like on the map; and map data for route search which corresponds to a geometric route structure, with the data in each layer being specified by and associated with location information (latitude and longitude coordinates). The road map data for display provides a map display to a display screen of the operation server 10, on which text data is overlaid onto the map display depending on the zoom level. The text data is also used for text search.

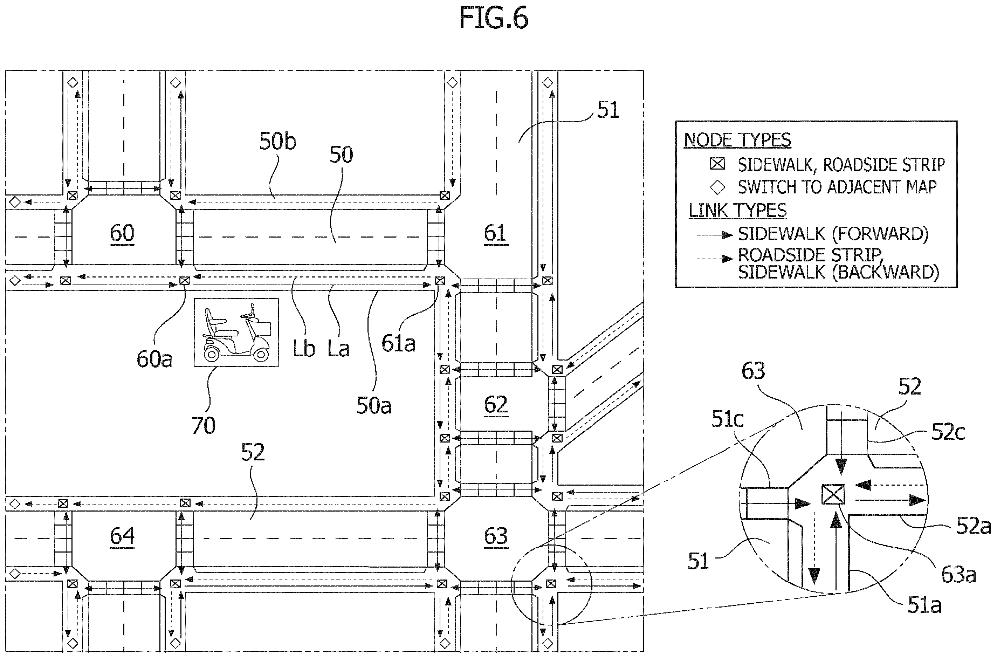

As illustrated in Figure 6, for example, the map data for route search includes nodes (for example, 60a, 61a, 60b, 61b, and so on) set at traffic turning points such as intersections (junctions to crosswalks), bend points, railroad crossings, facility locations (entrances and exits) connected by sidewalks and roadside strips designated as pedestrian traffic zones, and links (for example, La, Lb, and so on) set for each driving style allowed in the traffic zones connecting adjacent nodes, with each link being set as vector data for which orientation is uniquely determined by an initial point node and an final point node. Consequently, for a sidewalk (for example, 50a) allowing for travel in both the forward and backward directions during manual driving or the like, two links (La, Lb) are set in the forward and backward directions, respectively. On the other hand, for a roadside strip (for example, 50b), basically only a link (La) in the forward direction is set.

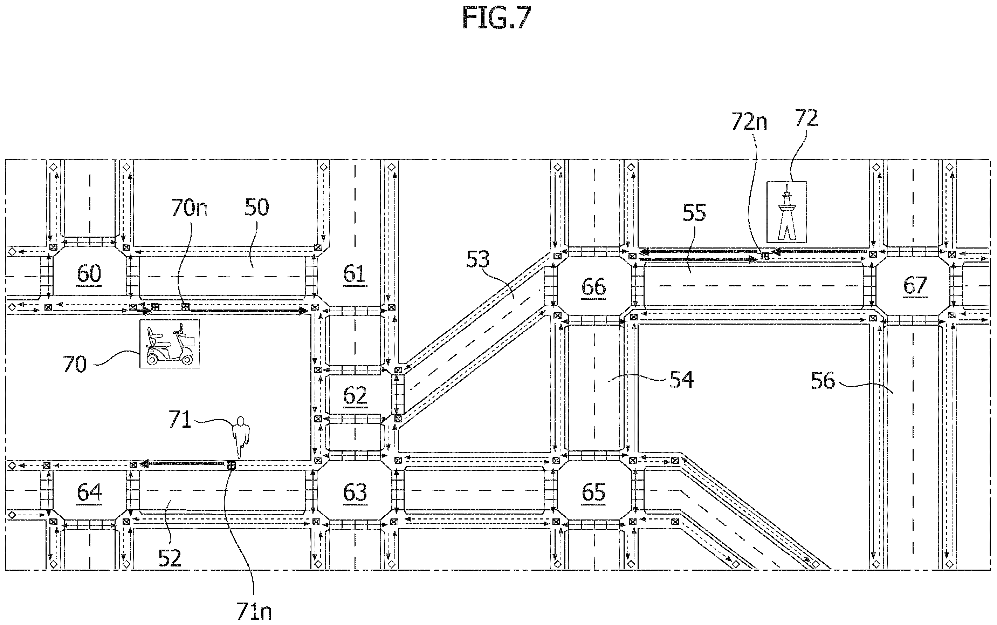

For example, as illustrated by the enlarged view of the area around a corner of the intersection 63 in Figure 6, the links in both the forward and backward directions of sidewalks 51a and 52a attached to the roads 51 and 52, respectively, and the links of crosswalks 51c and 52c crossing the roads 51 and 52, respectively, are connected to a node 63a in a corner of the intersection 63. Note that in Figure 6 and in Figures 7 to 11, described later, the roads are denoted by the reference numerals 50 to 56 while the intersections are denoted by the reference numerals 60 to 67.

Furthermore, a travel cost depending on the route length and a secondary travel cost depending on factors such as the road grade, width, and surface condition are set for each link, a secondary travel cost (penalty score) depending on the link connection angle and width (space) is set for each node, and route search is executed on the basis of these costs.

The planning part 13 (route generation part) is provided with a search algorithm that searches, on the basis of dynamically set nodes such as a departure point (pick-up point) and a destination (drop-off point) input into the display screen or the like of the operation server 10, for an optimal route from among a large number of travel routes connecting the nodes, performs a route display corresponding to the optimal route (and alternative routes) returned by the search, and also has functions for registering a confirmed route (travel plan) selected by the user 40 in the user management part 14 and registering the confirmed route in the vehicle 20 to be dispatched.

The infrastructure coordination part 16 acquires external information distributed by external organizations, such as road control information (traffic congestion, accidents, road closures, and the like), weather information (rainfall, snowfall, wind speed, and the like), and environmental information (smog, pollution) through the communication system 11 and maintains and updates the external information over its validity period so that the planning part 13 can refer to the information for route search.

The operation server 10 is provided with, separately from an input-output device for the setup and operation/management thereof, a monitor 32 and a remote control part 33 enabling the operator 30 to perform remote monitoring and remote control of the small electric vehicle 20. These are installed as an operator interface in a control seat of the operator 30, for example, and in such a control seat, a communication terminal 31 enabling the operator 30 to communicate with the communication terminal 21 of the subject vehicle 20 and the communication terminal 41 of the user 40 through the communication system 11 is also installed.

On the monitor 32, various setting information for the operation server 10, registration information pertaining to the vehicle management part 12 and the user management part 14, external information acquired by the infrastructure coordination part 16, and the like can be displayed in response to operations by the operator 30. Additionally, on the monitor 32, a map provided by the map database 15, a route generated in the planning part 13, particularly the confirmed route (including a dispatch route and a return route described later) and navigation registered in the user management part 14 and the vehicle 20 to be dispatched can be displayed, and an image (video) from a camera (external sensor 26) of the subject vehicle 20 can also be displayed. With this arrangement, the operator 30 can remotely control the subject vehicle 20 with the remote control part 33 while checking on the monitor 32 a forward video (and a surrounding video) while the subject vehicle 20 is traveling.

A fixed terminal used when renting/ordering the small electric vehicle 20 or the like can also be used as the user communication terminal 41 of the user 40, but during use of the subject vehicle 20, a mobile terminal that can be carried is necessary for dispatch guidance and authentication with the subject vehicle 20. Note that the small electric vehicle 20 is also provided with an in-vehicle speaker/pickup microphone connected to the communication terminal 21 to enable voice calls with the operator 30 during manual driving and the like, and by providing a passcode input device (such as a keypad), authentication of the subject vehicle 20 is possible.

### 2. Basic configuration of small electric vehicle

The small electric vehicle 20 is configured as a personal mobility vehicle (sidewalk-traveling vehicle) such as a mobility scooter or an electric wheelchair, in which a vehicle body is provided with a seat and a plurality of wheels, including drive wheels, and is provided with a manual control part 24 enabling manual driving by the user 40 (occupant) in a seated state and a drive unit 27 for driving the drive wheels.

For the manual control part 24, a joystick type that can be disabled easily during self-driving is suitable, but a handle type is also possible. In the case in which a handle-type steering control part is provided, in addition to the need for a steer-by-wire steering system, the handle itself is preferably retracted, folded, or covered by a cowling to make it difficult to be grasped by other pedestrians or the like.

The drive unit 27 can be configured as an electric wheelchair type, in which the driven wheels are provided as freewheels (omni-directional wheels) and the left and right drive wheels are driven separately by left and right motors such that forward and backward movement and left and right turning can be performed by controlling the left and right motors, but can also be configured as a mobility scooter type, in which the left and right drive wheels are driven by a single motor and the driven wheels are steered by an electric power steering apparatus. Although not particularly limited, the former is more consistent with a joystick-type manual control part, whereas the latter is more consistent with a handle-type manual control part.

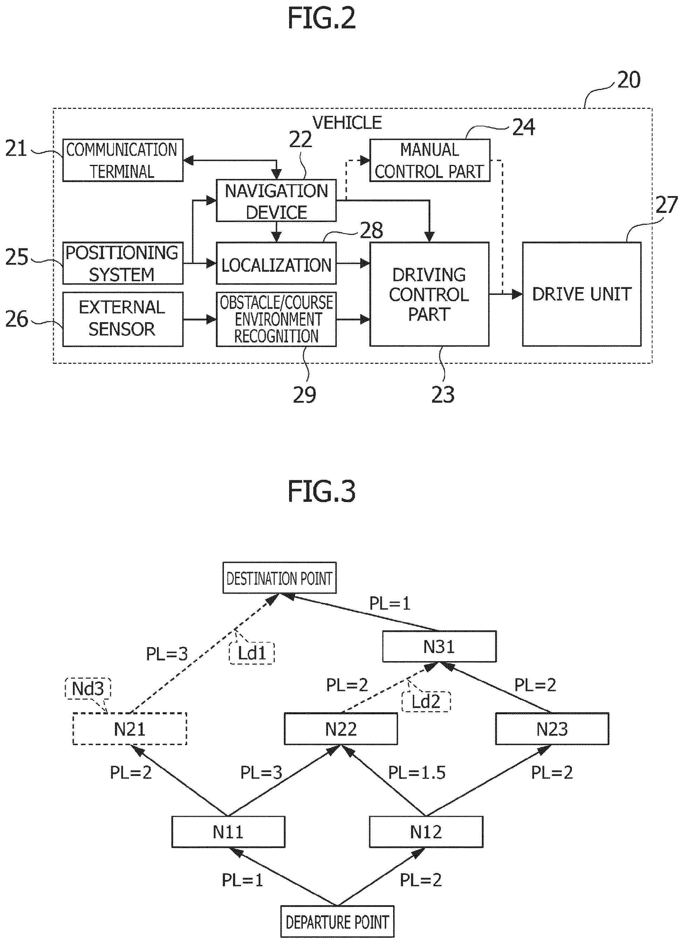

In addition to the manual driving mode in which the small electric vehicle 20 travels under user control, to enable operation in the self-driving mode for traveling autonomously in accordance with a predetermined route under remote monitoring, as illustrated in Figure 2, the small electric vehicle 20 includes a communication terminal 21 for mobile data communication and connection with the operation server 10 through the communication system 11, a navigation device 22 for route guidance, a driving control part 23 that controls the drive unit 27 according to the route guidance, a positioning system 25, and an external sensor 26.

For the positioning system 25, it is suitable to provide a global navigation satellite system (GNSS) receiver for receiving GNSS signals and acquiring the absolute location of the vehicle through positioning calculations, a magnetic sensor for measuring the geomagnetic field and acquiring the heading of the vehicle, and an inertial sensor for detecting the attitude, or in other words the three-dimensional inclination, of the vehicle, thereby enabling localization 28 of the vehicle and route guidance by the navigation device 22.

For the external sensor 26, it is suitable to provide cameras for imaging in front and around (the rear and sides) of the vehicle, and a LiDAR (laser scanner) for recognizing course structures and obstacles in front of the vehicle, whereby the combination of this detection information enables course environment recognition and obstacle recognition for autonomous driving.

For example, road surface markings such as white lines (lane markings) and crosswalks are recognized from a camera image, course structures of sidewalks and roadside strips are recognized from LiDAR 3D point cloud data, and by combining this recognition information, the course of the small electric vehicle 20 and its position in the lateral direction on the course are specified. Traffic signals and road traffic signs are also recognized from the camera image and used for driving control. Note that, as described already, the camera image (video) is transmitted to the operation server 10 through the communication terminal 21 and used for remote monitoring and remote control by the operator 30.

The driving control part 23 recognizes the course environment and driving status of the vehicle 20 on the basis of the above-described localization 28 by the positioning system 25, the route provided by the navigation device 22, and obstacle and course environment recognition 29 based on detection information from the external sensor 26, and at the same time predicts the movement of nearby mobile objects and controls the drive unit 27 to achieve autonomous driving by decelerating or stopping to avoid interference if there is a possibility of interference. Also, if an obstacle consisting of a non-mobile object on the course is detected, a local route for avoiding the obstacle is generated, and steering avoidance is executed.

### 3. Route search

When performing a route search in the planning part 13, reference points for the following four locations are set as dynamic nodes on the basis of input information from the user 40 connected to the operation server 10.
(1) A pick-up point designated by the user
(2) A drop-off point (destination point) designated by the user
(3) A vehicle station (departure point) designated on the basis of the pick-up point
(4) A vehicle station (if different from the departure point) designated on the basis of the drop-off point

Of these, if (1) and (2) are not selected from among existing nodes on the road map data, nodes are added on links that pass through or are adjacent to the designated points.

A travel cost (L1) depending on the route length and a secondary travel cost (L2) depending on factors such as the road grade, width, and surface condition are set for each link, and a secondary travel cost (penalty score) depending on the width or space (N1) and the link connection angle (N2) is set for each node, as already described. In a route search, the travel cost (L1) depending on the route length (PL) is the major cost of a route search, whereas the other travel cost (penalty score) is a secondary cost supplement metric that adjusts the main cost in an increasing direction. More practical travel routes can be derived by combining known route search methods (such as the A* algorithm and Dijkstra's algorithm) with "main cost (L1) adjustment by a cost supplement metric (L2, N1, N2)" to find an optimal route with the lowest total cost.

For example, in Figure 3, if a search for a travel route is performed using the travel cost (L1) depending on the route length PL (travel distance) of each link, the route passing through the nodes N11 and N21 has the shortest total route length, and the route passing through the nodes N11 and N21 is the optimal route.

However, if there exists an element (L2) indicating the load actually incurred during travel besides the cost (L1; route length, travel time) associated with the travel itself, the element is incorporated into the link as a cost supplement metric and the travel cost is adjusted. The cost supplement metric (L2) may also include a temporary cost (penalty score) acquired by the infrastructure coordination part 16, such as traffic congestion information and road maintenance information other than the above.

For example, if road maintenance information (Ld1) and traffic congestion information (Ld2) exist on the two links indicated by the dashed lines in Figure 3, the travel costs (PL=3, PL=2) for these links are adjusted by the temporary travel costs (Ld1, Ld2), respectively. For example, if Ld1 and Ld2 are weighted to be 1.5 and 2 times the cost, the route passing through the nodes N12, N23, and N31 has the lowest cost.

Note that, in addition to travel costs such as the width or space (N1) and the link connection angle (N2) for nodes, it is also necessary to recognize traffic signals when passing through intersections and crosswalks, wait for signals as necessary, and pass through at the appropriate time, and travel costs caused by the above are also incurred. In the case of a railroad crossing, a link cost associated with crossing the railroad tracks is also incurred in addition to the cost of recognizing an alarm (warning sound) and the crossing gate.

Moreover, a time-limited cost (penalty score) acquired by the infrastructure coordination part 16 may also be added to a node. For example, if intersection congestion information (Nd3) exists for the node N21 indicated by the dashed line in Figure 3, the travel costs (PL=2, PL=3) for the links connected to the node N21 may also be adjusted by the temporary travel cost (Nd3).

### 4. Operation flow from dispatch request to plan confirmation

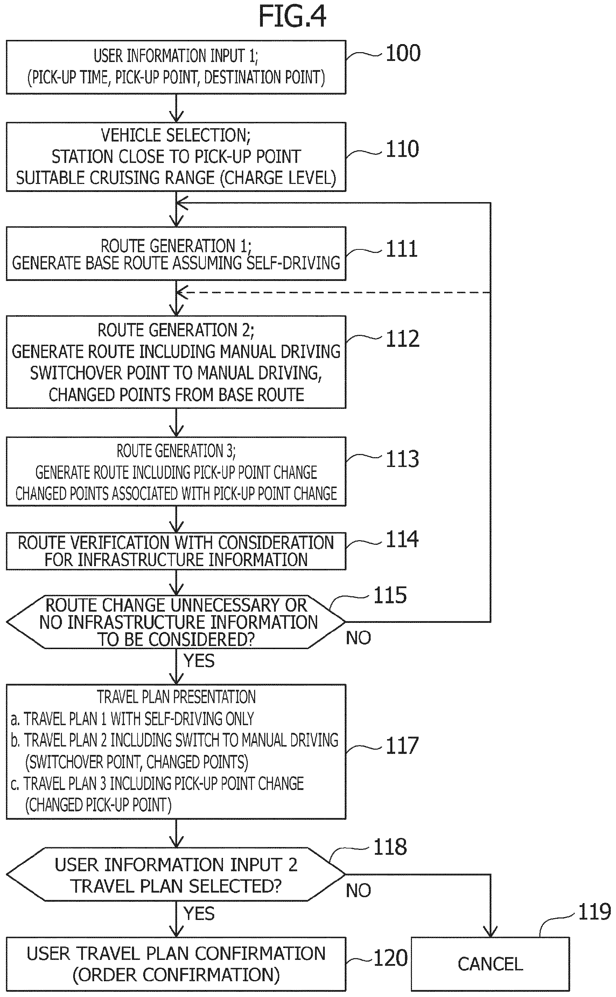

Next, the flow from route generation to travel plan presentation in response to a dispatch request from a user in the operation system according to the present invention will be described with reference to the flowchart in Figure 4 and the maps in Figures 7 to 11.

First, the user 40 desiring to use the small electric vehicle 20 (automatic transportation service) connects to the operation server 10 and inputs reservation information such as the desired use date, desired pick-up time, desired pick-up point, destination point (desired drop-off point), and the like (step 100).

If the input of information by the user 40 is completed, the operation server 10 accesses the vehicle management part 12, compares the desired pick-up point of the user 40 to the status of vehicles 20 registered in a vehicle station 70 located in a service area, and selects a vehicle 20 with compatible status, cruising range (charge level), and the like (step 110).

In addition, as illustrated in Figure 7, the planning part 13 first adds the selected vehicle station 70, the desired pick-up point 71 and destination point (desired drop-off point) 72 of the user 40 as dynamic nodes 70n, 71n, and 72n to the map data for route search. Accordingly, dynamic links (indicated by thick arrows in Figure 7) starting or ending at these nodes 70n, 71n, and 72n are also added to the data.

Next, in the map data for route search to which dynamic nodes (links) have been added as described above, a search for an optimal route is performed under the assumption that the vehicle will travel from the vehicle station 70 to the desired pick-up point 71 (71n) by unmanned self-driving, travel from the desired pick-up point 71 (71n) to the destination point 72 (72n) by manned self-driving, and then return from the destination point (desired drop-off point) 72 (72n) to the vehicle station 70 by unmanned self-driving (step 111).

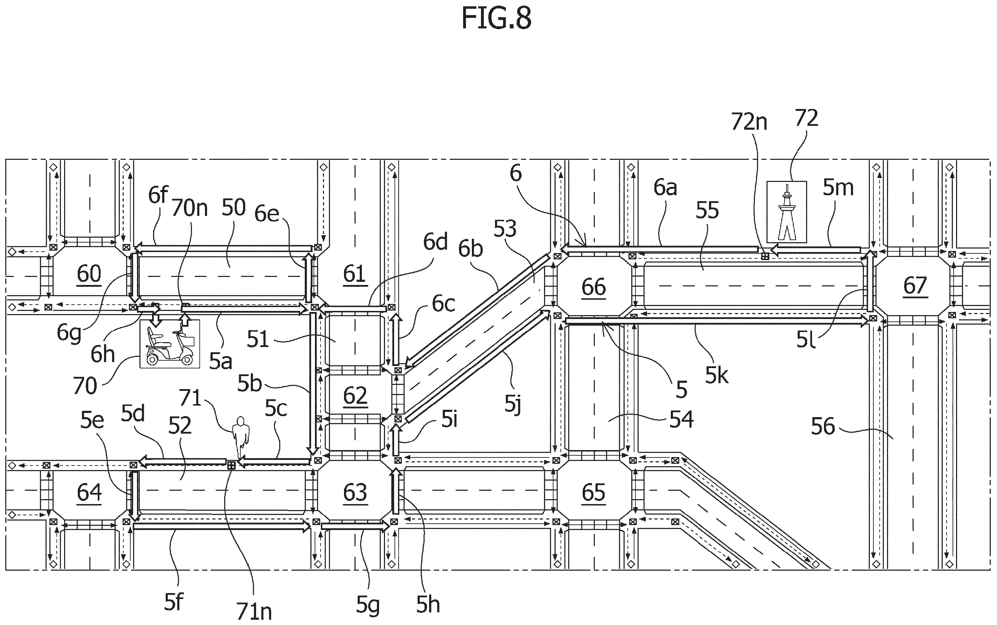

In Figure 8, base routes (5, 6) generated under the assumption of self-driving as described above are indicated by block arrows. The base routes (5, 6) include a dispatch route (5a to 5c) that travels from the vehicle station 70 to the desired pick-up point 71 by unmanned self-driving, a user travel route (5d to 5m) that travels from the desired pick-up point 71 to the destination point (desired drop-off point) 72 by manned self-driving, and a return route (6; 6a to 6h) that travels from the destination point (desired drop-off point) 72 to the vehicle station 70 by unmanned self-driving.

Next, the planning part 13 executes a search for an optimal route with respect to the user travel route (5d to 5m) with consideration for the case in which the user 40 travels by manual driving (step 112).

As described above, since the base routes (5, 6) assume only self-driving, the links going in the opposite direction on each sidewalk are excluded from the search. However, since manual driving by the user 40 is also possible on the user travel route (5d to 5m), a route search that also includes the links going in the opposite direction on each sidewalk is performed, and there is also a possibility that travel cost will be reduced, such as by the travel route being shortened, as a result of switching from self-driving to manual driving.

For example, the base route 5 illustrated in Figure 8 crosses a road 54 at an intersection 66, travels along the sidewalk (forward-direction link 5k) along a road 55, crosses the road 55 at an intersection 67 (link 51), and travels on the sidewalk (forward-direction link 5m) on the opposite side of the road 55 to reach the entrance (node 72n) of the destination 72.

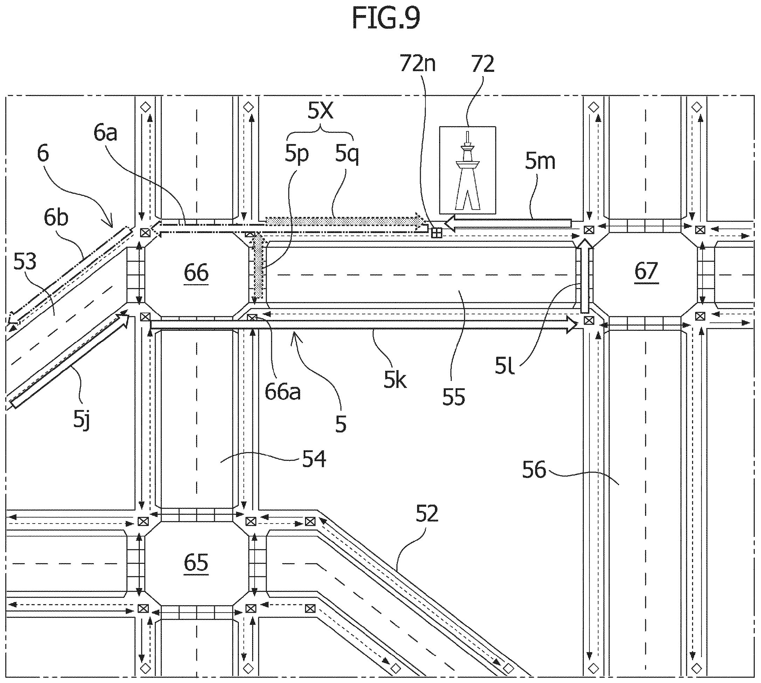

However, if the case of traveling by manual driving is considered, as illustrated in Figure 9 which is an enlarged view of the main portion of Figure 8, the user could switch to manual driving at a point 66a after crossing the road 54 at the intersection 66, cross a crosswalk (link 5p), and drive on the sidewalk (backward-direction link 5q) on the opposite side of the road 55 to reach the entrance (node 72n) of the destination 72.

The user 40 can accept manual driving and change to such an alternative route 5X (5p, 5q) to thereby shorten the route (shorten the time required). Moreover, since there is a possibility that the user may incorrectly think that by traveling on the base route (5k to 5m) prioritizing the forward direction, the vehicle will pass by the destination 72 without noticing, it is preferable to notify the user in advance that a circle-around will occur as described above when presenting the base routes (5, 6) as the optimal route. This arrangement makes it possible to avoid a situation in which the user who did not select the alternative route 5X feels uncomfortable during actual travel or unexpectedly disengages self-driving and drops off.

Next, the minimum of the desired pick-up point 71 (71n) of the user 40 is changed, that is, the unmanned driving segments (dispatch route 5a to 5c) adjacent to the node 71n is changed to 1 or 2 nodes (alternative nodes), and a search for an optimal route is executed (step 113).

The desired pick-up point 71 is designated according to the desires of the user 40, but as a result, there is also a possibility that the point is not an optimal point given the circumstances (such as the location of the vehicle station 70 and the transportation conditions) on the service-providing side, and in some cases, the user 40 may designate a point without a definite reason. Consequently, in some cases, a slight change in the pick-up point may be expected to reduce costs and shorten the route (shorten the time required) by more than the cost of accepting the cost of travel by the user 40 for the change.

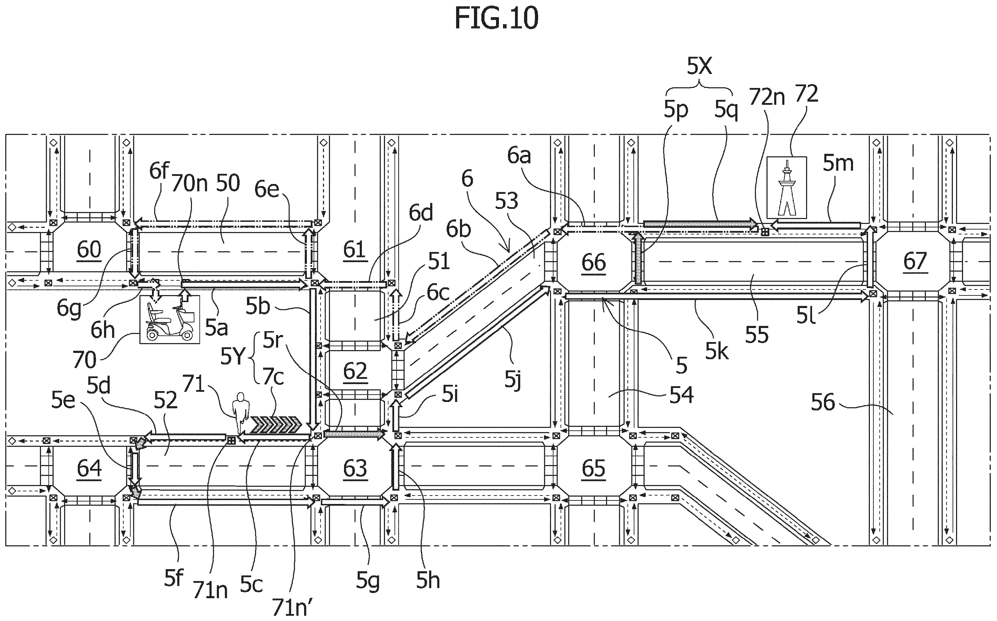

For example, as illustrated in Figure 10, by searching for an optimal route with the node set at the corner of the intersection 63 adjacent to the desired pick-up point 71 (71n) of the user 40 treated as an alternative node 71n' (alternative pick-up point candidate), an alternative route 5Y (5r) that crosses (link 5r) the intersection 63 directly from the point is generated.

The alternative route 5Y requires movement 7c equivalent to one link 5c of the user 40, but having the user 40 accept this cost has the advantage of shaving off the cost of circle-around on a route that travels on the sidewalk (forward-direction link 5d) along the road 52 in the direction away from destination 72, crosses (link 5e) the road 52 at an intersection 64, travels on the sidewalk (forward-direction link 5f) on the opposite side of the road 55, crosses (link 5g) the road 51 at the intersection 63, and crosses (link 5h) the road 52 again, and two road crossings on the base route 5.

Note that it is obvious that additional burdens on the user 40 should be minimized as much as possible, but depending on the status of the dispatch route adjacent to the desired pick-up point, a shorter route (shorter time required) is expected in some cases by further changing the pick-up point.

Accordingly, the travel cost is recorded as a provisional value for the case of treating the first alternative node 71n' described above as a primary alternative node, a search for an optimal route is performed with the secondary alternative node (the node adjacent to the intersection 62) adjacent to the primary alternative node 71n' treated as an alternative pick-up point candidate, and the travel cost in that case is compared to the provisional value of the travel cost associated with the primary alternative node to verify whether further cost reduction is expected. These provisional values preferably also include the travel costs of the user associated with a pick-up point change, so as to avoid over-burdening the user. Additionally, a threshold value may be imposed on the travel distance for the alternative node, and the alternative process may be terminated when the threshold value is exceeded.

For example, in the example illustrated in Figure 10, the primary alternative node 71n' is confirmed because no large cost reduction, such as avoiding a road crossing, is expected from changing from the primary alternative node 71n' to the secondary alternative node (the node adjacent to the intersection 62) compared to the increased burden on the user, or because the travel distance will exceed the threshold value.

As described above, when travel plans (base plan and alternative plans) to be presented to the user 40 have been provisionally confirmed through the generation of the base routes 5 and 6 assuming only self-driving, the generation of the alternative route 5X considering manual driving, and the generation of the alternative route 5Y considering changes of the pick-up point, the planning part 13 references external information (infrastructure information) acquired through the infrastructure coordination part 16 and verifies whether there are any obstacles such as traffic congestion or weather conditions in each provisionally defined route plan (step 114).

If infrastructure information to be considered exists on the base route 5 (step 115; NO), the base routes 5 and 6 are generated again with consideration for the infrastructure information. If infrastructure information to be considered exists only on the alternative route 5X, only the alternative route 5X is generated again, and depending on the circumstances, the presentation of a travel plan is performed without including a presentation of the alternative route.

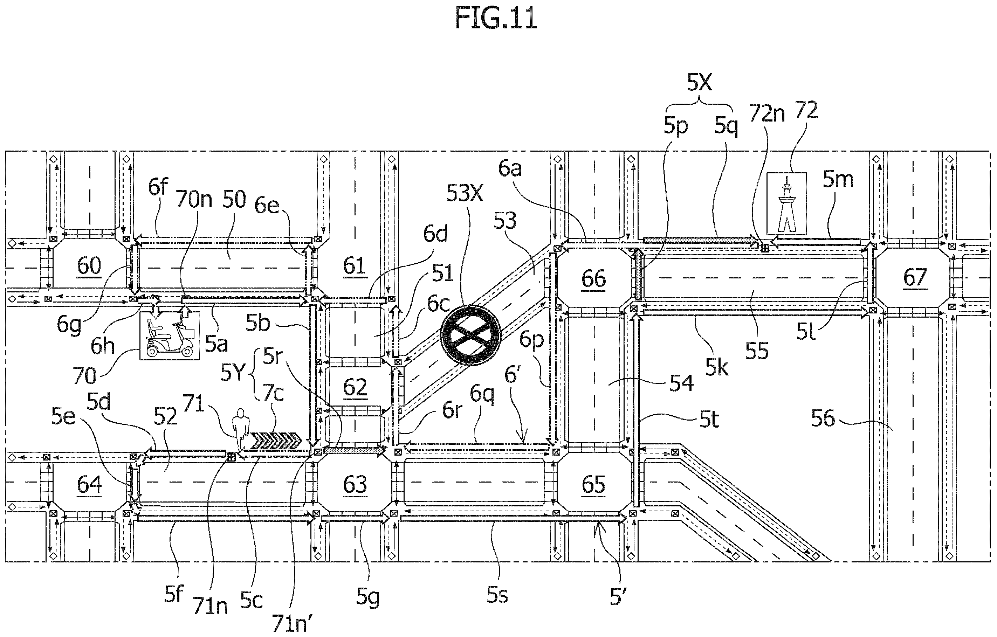

For example, Figure 11 illustrates a case in which, on the day in question, the user 40 has requested a vehicle dispatch from near the pick-up point 71 using a mobile terminal or the like as the user terminal 41, and the generation of a travel plan was executed, but when there is a road closure 53X due to a traffic accident or the like on the road 53, routes 5' and 6' are generated to bypass the road closure 53X through links 5s and 5t and links 6p, 6q, and 6r instead of the base routes 5 and 6.

The case in which infrastructure information to be considered exists only on the base route 6 (return route) is handled by, for instance, comparing the travel cost associated with returning to the vehicle station 70 by the re-generated return route 6' to the travel and retrieval costs to another station or retrieval point. The return routes 6 and 6' are not presented to the user 40, and are displayed only on a management screen of the operator 30 or the like.

If the travel plans (base plan, alternative plans) to be presented are confirmed via verification according to infrastructure information (step 115; YES), the planning part 13 presents the travel plans (base plan, alternative plans) to the user 40 (step 117).

That is, each of the following travel plans is presented to the user:
(a) Travel plan 1 with self-driving only (base route 5)
(b) Travel plan 2 including a switch to manual driving (alternative route 5X; switchover point)
(c) Travel plan 3 including pick-up point change (alternative route 5Y; changed pick-up point)

These travel plans are presented to the user in a state with, for example, the nodes and links and the return routes 6 and 6' hidden from the administrative map (map for route search) illustrated in Figure 10 or Figure 11, with the travel route 5 and the alternative routes 5X and 5Y superimposed onto the road map data for display, and with captions such as estimated time required (estimated arrival time) for each of the travel plans added. The travel plans may also be accompanied by voice guidance.

If the user 40 selects one of the travel plans (step 118; YES), the user travel plan is confirmed, and an order is confirmed on the basis of registration information pertaining to the user 40 (step 120).

On the other hand, if the user 40 does not select any of the travel plans or has performed a cancel operation, the process is canceled (step 119).

### 5. Operation flow from dispatch to route traveling to autonomous return

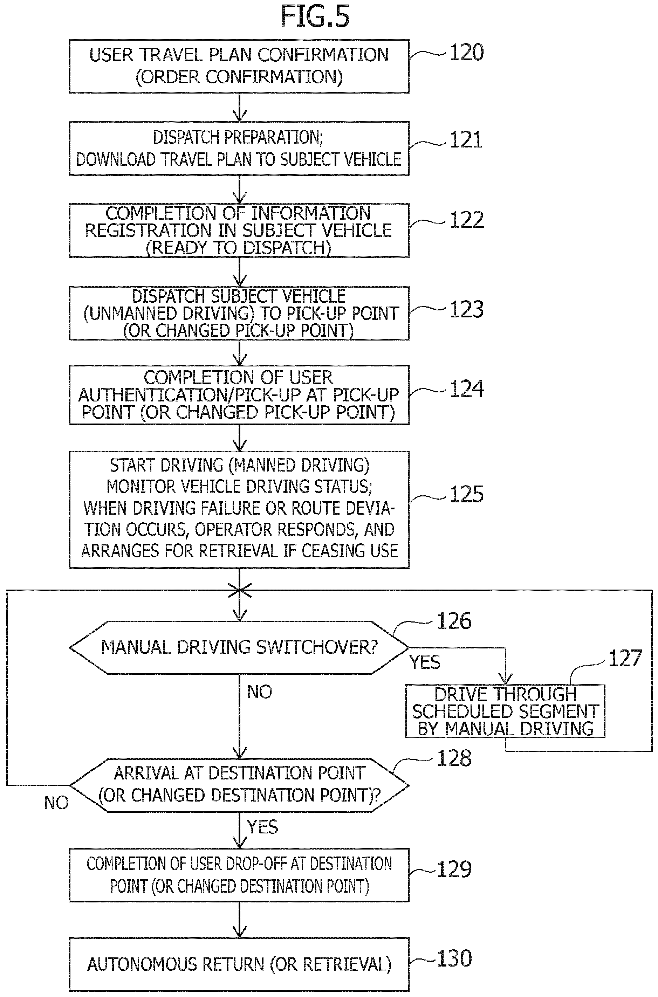

Next, dispatch and route traveling assuming the case in which the user 40 has selected a travel plan including both of the alternative routes 5X and 5Y will be described with reference to the flowchart in Figure 5 and Figure 10.

If the user travel plan is confirmed and an order by the user 40 is confirmed (step 120), the operation server 10 proceeds to dispatch preparation of the small electric vehicle 20 selected for dispatch (hereinafter simply referred to as the subject vehicle 20). First, the operation server 10 performs a download of navigation data pertaining to the confirmed travel plan, user authentication information, and the like to the navigation device 22 of the subject vehicle 20 through the communication system 11 and the communication terminal 21 (step 121).

If the download (information registration) to the subject vehicle 20 is completed and a dispatchable state is achieved, the subject vehicle 20 stands by at the vehicle station 70 until a departure time back-calculated from the pick-up time of the date of use (step 122). Note that in the case of an immediate dispatch request, the subject vehicle 20 departs the vehicle station 70 toward the pick-up point (71n') as soon as the dispatch preparation is completed. In this case, the user 40 is notified of the expected arrival time as the expected pick-up time. Note that although the three travel plans described above are displayed in Figure 10, routes other than the confirmed travel plan are not displayed on the communication terminal 41 of the user 40 (HMI device of the subject vehicle 20).

The subject vehicle 20, under monitoring by the operator 30, travels on the dispatch route (links 5a, 5b) from the vehicle station 70 toward the pick-up point (71n') by unmanned self-driving (step 123). In the case of an immediate dispatch request, the user 40 travels (7c) from the original desired pick-up point (71n) to the changed pick-up point (71n') on foot during this time. Note that the changed pick-up point (71n') in the example illustrated in the drawing is set to a corner of the intersection 63, but since there is a possibility that this location may be crowded with other pedestrians and the like, the subject vehicle 20 stops shortly before the changed pick-up point (71n') and gives notice of the arrival of the subject vehicle 20 to the communication terminal 41 of the user 40. The meeting support function including such an arrival notice will be described later.

The subject vehicle 20, having arrived at the changed pick-up point (71n'), enters a state of standing by for authentication by the user 40, and driving functions are locked until an authentication operation is performed by the user 40. If authentication (lock release) by the user 40 is completed, the subject vehicle 20 enters a state of standing by to depart, and if the pick-up of the user 40 onto the subject vehicle 20 is completed (step 124) and the user 40 performs a departure operation such as by operating a start button on the HMI device of the subject vehicle 20 or on the user communication terminal 41, the subject vehicle 20 initiates manned self-driving toward the destination point 72 (step 125).

Immediately after starting off, the subject vehicle 20 changes direction to cross the crosswalk (link 5r) at the intersection 63, checks for a green light to cross the road 51 at the crosswalk (link 5r), travels on the sidewalk (link 5i) along the road 51, and turns right at the corner of the intersection 62 to travel on the roadside strip (link 5j) of the road 53.

During manned driving, too, the driving status (such as driving and stopping, location, and SOC) of the subject vehicle 20 is monitored by the operation server 10 (operator 30) through the communication system 11 (21). The operation server 10 records the driving location and time of the subject vehicle 20 in the vehicle management part 12 (user management part 14). The operator 30 can check the location and status of the subject vehicle 20 through navigation information displayed on the monitor 32, such as a vehicle indicator on a map screen, and can check the status of the subject vehicle 20 and the user 40 through an image from a camera (external sensor 26). With this arrangement, in the event of a driving failure or a significant deviation from the route during travel in the manual driving mode (described later), the operator 30 can communicate with the user 40 through the communication terminal 21 of the subject vehicle 20 or the communication terminal 41 of the user 40, and if necessary, remotely control the subject vehicle 20 with the remote control part 33 while checking a forward video (and a surrounding video) of the subject vehicle 20 on the monitor 32.

If the travel plan includes a switchover to manual driving (step 126; YES, the present example corresponds to this case), at a predetermined timing, such as when the subject vehicle 20 approaches the switchover point (intersection 66) for switching over to manual driving, the user 40 is given advance notice of the imminent arrival at the switchover point for switching over to manual driving from the HMI device of the subject vehicle 20 (or the user communication terminal 41). Thereafter, the subject vehicle 20 stops after crossing the intersection 66, the user 40 is notified of the switchover to the manual driving mode, and the subject vehicle 20 enters a state of standing by for an operation by the user 40.

If the user 40 performs a prescribed operation, such as operating a start button, the manual control part 24 goes into an operable state, the navigation device 22 (or navigation through the user communication terminal 41) is initiated, and driving is switched to the manual driving mode by the user 40 (step 127).

Through manual driving by the user 40, the subject vehicle 20 crosses the road 55 at the crosswalk (link 5p) of the intersection 66, turns right, and travels on the sidewalk (link 5q) along the road 55, thereby arriving at the destination 72 (node 72n) (step 128; YES) and also ending the manual driving mode of the subject vehicle 20, and if the user 40 completes drop-off (step 129), the subject vehicle 20 travels on the return route (6; 6a to 6h) by unmanned self-driving to return to the vehicle station 70 (step 130).

Note that in the time between giving advance notice of approaching the switchover point (intersection 66) for switching over to the manual driving until notifying the user of the switchover to the manual driving mode, or after switching over to the manual driving mode, if the user 40 issues a self-driving request to the operator 30, it is also possible to switch to self-driving under remote control by the operator 30. Also, when presenting the travel plan 2, an option for such self-driving under remote control may also be selectable.

### 6. Meeting support function

The operation system according to the present invention preferably has a meeting support function like that following, so that the subject vehicle 20 dispatched by unmanned self-driving and the user 40 can meet up smoothly at any pick-up point (meeting point, meeting place).

(1) The operation server 10 has a meeting support function that, when the subject vehicle 20 arrives at the pick-up point, gives notice of the arrival of the subject vehicle 20 to the communication terminal 41 of the user 40 through the communication system 11. For example, by displaying the status of the subject vehicle 20 on a navigation screen or user screen displayed on the communication terminal 41 when the user 40 uses the subject vehicle 20, and also giving notice through speech, a buzzer, or the like, the user 40 can be made aware of the arrival of the subject vehicle 20 even if the user 40 is on the move and not looking at the screen of the communication terminal 41.
(2) The operation server 10 may also have a function that, when the subject vehicle 20 has approached to within a predetermined distance to the pick-up point, gives notice, through the communication system 11, of the approach of the subject vehicle 20 to the pick-up point to the communication terminal 41 of the user 40. Like the above, the user 40 can be made aware of the approach of the subject vehicle 20 even if the user 40 is on the move and not looking at the screen of the communication terminal 41.
(3) The operation server 10 may also have a function that displays the relative distance between the pick-up location and the communication terminal 41 of the user 40, or a signal corresponding thereto, on the communication terminal 41 of the user 40. For example, besides displaying the relative distance as a numerical value, the emitted light intensity of a light-emitting part such as the screen may be changed progressively (from a weak light to a bright light), the color of the fermentation part may be changed, or the periodicity of an intermittent signal such as a flash of light or a buzzer may be shortened progressively, according to the relative distance.

A signal that changes depending on the relative bearing may also be emitted instead of the relative distance or simultaneously with the relative distance. For example, the signal may be emitted if the bearing of the communication terminal 41 of the user 40 is aligned with the direction in which the subject vehicle 20 exists, or the signal intensity may be increased in accordance with the alignment.

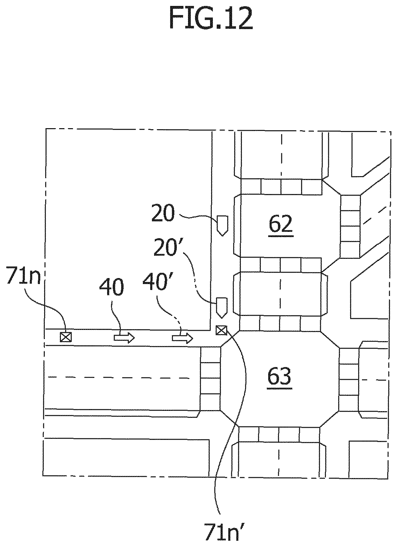

Also, if (the communication terminal 41 of) the user 40 is within a predetermined distance to the subject vehicle 20, lights on the subject vehicle 20, such as the blinkers for example, may be made to blink in response to an operation on the communication terminal 41 of the user 40. For example, an operation by the user 40 is input into the operation server 10 through the communication system 11, and a light blinking command is output to the subject vehicle 20 from the vehicle management part 12 or the user management part 14 of the operation server 10, thereby enabling the user 40 to reliably know that the subject vehicle 20 is the vehicle to be boarded, even from a distance.
(4) The operation server 10 may also have a function that displays a camera image or a surrounding image from the subject vehicle 20 on the communication terminal 41 of the user 40 when the subject vehicle 20 is traveling on the dispatch route has stopped within a predetermined distance to the pick-up point. Displaying a camera image or surrounding image from the subject vehicle 20 on the communication terminal 41 can help the user 40 to grasp the stopped location of the subject vehicle 20 by visually checking the scenery around the place where the subject vehicle 20 has stopped.
(5) The operation server 10 may also have a function that displays, on the communication terminal 41 of the user 40 through the communication system 11, a map of an area near the pick-up location and current locations of the user communication terminal 41 and the subject vehicle 20 on the map. The current location of the user communication terminal 41 is acquired using a location information acquisition function built into the communication terminal 41. For example, as illustrated in Figure 12, by displaying the original desired pick-up point (71n), the changed pick-up point (71n'), an indicator of the subject vehicle 20, and an indicator of the user 40 (communication terminal 41), the approach and arrival of the subject vehicle 20 can be grasped while checking the location of the changed pick-up point (71n').

Although an embodiment of the present invention has been described above, the present invention is not limited to the above embodiment. The invention is defined in the appended claims.

### [Reference Signs List]

- 10: Operation server
- 11: Communication system
- 12: Vehicle management part
- 13: Planning part
- 14: User management part
- 15: Map database
- 16: Infrastructure coordination part
- 20: Small electric vehicle (vehicle, subject vehicle)
- 21: Communication terminal
- 22: Navigation device
- 23: Driving control part
- 24: Manual control part
- 25: Positioning system
- 26: External sensor
- 27: Drive unit
- 28: Localization
- 29: Obstacle and course environment recognition
- 30: Operator
- 31: Communication terminal
- 32: Monitor
- 33: Remote control part
- 40: User
- 41: Communication terminal
- 50 to 56: Road
- 60 to 67: Intersection
- 70: Vehicle station
- 71: Desired pick-up point
- 71n': Changed pick-up point
- 72: Destination point (desired drop-off point)

## Claims

1. An operation system for an electric personal mobility vehicle (20), the operation system including:
an operation server (10) connected to a communication system (11) and comprising a map database (15) which includes links set for pedestrian traffic zones including sidewalks; and
an electric personal mobility vehicle (20) which is adapted to connect to the operation server (10) through the communication system (11), and which has a self-driving mode for traveling following a predetermined route and a manual driving mode for traveling under user control,
the operation server (10) comprises a route generation part (13) that generates a plurality of travel routes based on the data in the map database (15), in response to a dispatch request from a user communication terminal (41) connected through the communication system (11), the travel routes include a first travel route by unmanned driving from a current location of the vehicle (20) to a pick-up location for a user (40) associated with the user communication terminal (41) and a second travel route by manned driving from the pick-up location for the user (40) to a destination location,
the operation server (10) is configured to perform a download of the travel routes to the user communication terminal (41) via the communication system (11), and
has a meeting support function that gives notice of arrival to the user communication terminal (11) when the vehicle (20) is driven by unmanned driving on the first travel route and arrives at the pick-up location for the user,
**characterized in that**
both forward links and backward links are set for the sidewalks in the map database (15);
the first travel route and the second travel route are generated by the route generation part (13) such that travel by self-driving does not include backward links on the sidewalk, and travel by manual driving includes backward links on the sidewalk, and
the route generation part (13) is further configured, if the route length and the time required would be shortened by changing the pick-up location designated by the user (40), to generate a travel route candidate including a change of the pick-up location, and to present the travel route candidate, including an estimated time required for the travel route candidate, on the user communication terminal (41).

2. The operation system for an electric personal mobility vehicle (20) according to claim 1, wherein the meeting support function includes a function that gives notice of approaching the pick-up location to the user communication terminal (41) when the vehicle (20) has approached to within a predetermined distance to the pick-up location.

3. The operation system for an electric personal mobility vehicle (20) according to claim 2, wherein the meeting support function includes a function that displays the relative distance between the pick-up location and the user communication terminal (41), or a signal corresponding thereto, on the user communication terminal (41).

4. The operation system for an electric personal mobility vehicle (20) according to claim 1, wherein the meeting support function includes a function that displays a camera image or a surrounding image from the vehicle (20) on the user communication terminal (41) when the vehicle (20) has traveled on the first travel route to at least within a predetermined distance to the pick-up location.

5. The operation system for an electric personal mobility vehicle (20) according to claim 1, wherein the meeting support function includes a function that displays, on the user communication terminal (41), a map of an area near the pick-up location and current locations of the user communication terminal (41) and the subject vehicle (20) on the map.

## Patentansprüche

1. Betriebssystem für ein elektrisches persönliches Mobilitätsfahrzeug (20), wobei das Betriebssystem umfasst:
einen Betriebsserver (10), welcher mit einem Kommunikationssystem (11) verbunden ist und eine Karten-Datenbank (15) umfasst, welche Verknüpfungen umfasst, welche für Fußgänger-Verkehrszonen festgelegt sind, welche Gehwege umfassen; und
ein elektrisches persönliches Mobilitätsfahrzeug (20), welches dazu eingerichtet ist, sich mit dem Betriebsserver (10) durch das Kommunikationssystem (11) zu verbinden, und welches einen selbstfahrenden Modus zum Fortbewegen folgend einer vorbestimmten Route und einen manuellen Fahrmodus zum Fortbewegen unter einer Nutzersteuerung aufweist,
wobei der Betriebsserver (10) einen Routengenerierungsteil (13) umfasst, welcher eine Mehrzahl von Fortbewegungsrouten auf Grundlage der Daten in der Karten-Datenbank (15) generiert, in Reaktion auf eine Ausführungsaufforderung von einem Nutzerkommunikationsendgerät (41), welches durch das Kommunikationssystem (11) verbunden ist, wobei die Fortbewegungsrouten eine erste Fortbewegungsroute durch unbemanntes Fahren von einem aktuellen Standort des Fahrzeugs (20) zu einem Abholstandort für einen Nutzer (40), welcher mit dem Nutzerkommunikationsendgerät (41) verknüpft ist, und eine zweite Fortbewegungsroute durch bemanntes Fahren von dem Abholstandort für den Nutzer (40) zu einem Zielstandort umfasst,
wobei der Betriebsserver (10) dazu eingerichtet ist, einen Download der Fahrrouten auf das Nutzerkommunikationsendgerät (41) über das Kommunikationssystem (11) durchzuführen, und
eine Treffen-Unterstützungsfunktion aufweist, welche eine Benachrichtigung eines Eintreffens an das Nutzerkommunikationsendgerät (41) ausgibt, wenn das Fahrzeug durch unbemanntes Fahren auf der ersten Fortbewegungsroute gefahren wird und an dem Abholstandort für den Nutzer eintrifft,
**dadurch gekennzeichnet, dass**
sowohl Vorwärtsverknüpfungen als auch Rückwärtsverknüpfungen für die Gehwege in der Karten-Datenbank (15) festgelegt sind;
die erste Fortbewegungsroute und die zweite Fortbewegungsroute durch den Routengenerierungsteil (13) generiert sind, so dass Fortbewegen durch Selbstfahren Rückwärtsverknüpfungen auf dem Gehweg nicht umfasst, und Fortbewegen durch manuelles Fahren Rückwärtsverknüpfungen auf dem Gehweg umfasst, und
der Routengenerierungsteil (13) ferner dazu eingerichtet ist, falls die Routenlänge und die erforderliche Zeit durch ein Ändern des Abholstandorts, welcher von dem Nutzer designiert ist, verkürzt werden würde, einen Fortbewegungsroutenkandidat, welcher eine Änderung des Abholstandorts umfasst, zu generieren, und den Fortbewegungsroutenkandidaten, welcher eine geschätzte Zeit umfasst, welche für den Fortbewegungsroutenkandidaten erforderlich ist, auf dem Nutzerkommunikationsendgerät (41) darzustellen.

2. Betriebssystem für ein elektrisches persönliches Mobilitätsfahrzeug (20), nach Anspruch 1, wobei die Treffen-Unterstützungsfunktion eine Funktion umfasst, welche eine Benachrichtigung über ein Annähern an den Abholstandort an das Nutzerkommunikationsendgerät (41) ausgibt, wenn das Fahrzeug (20) sich innerhalb einer vorbestimmten Distanz an den Abholstandort angenähert hat.

3. Betriebssystem für ein elektrisches persönliches Mobilitätsfahrzeug (20), nach Anspruch 2, wobei die Treffen-Unterstützungsfunktion eine Funktion umfasst, welche die relative Distanz zwischen dem Abholstandort und dem Nutzerkommunikationsendgerät (41), oder ein Signal, welches dieser entspricht, auf dem Nutzerkommunikationsendgerät (41) anzeigt.

4. Betriebssystem für ein elektrisches persönliches Mobilitätsfahrzeug (20), nach Anspruch 1, wobei die Treffen-Unterstützungsfunktion eine Funktion umfasst, welche ein Kamerabild oder ein Umgebungsbild von dem Fahrzeug (20) auf dem Nutzerkommunikationsendgerät (41) anzeigt, wenn sich das Fahrzeug (20) auf der ersten Fortbewegungsroute zu wenigstens innerhalb einer vorbestimmten Distanz zu dem Abholstandort fortbewegt hat.

5. Betriebssystem für ein elektrisches persönliches Mobilitätsfahrzeug (20), nach Anspruch 1, wobei die Treffen-Unterstützungsfunktion eine Funktion umfasst, welche, auf dem Nutzerkommunikationsendgerät (41), eine Karte eines Bereichs nahe des Abholstandorts und derzeitiger Standorte des Nutzerkommunikationsendgeräts (41) und das betreffende Fahrzeug (20) auf der Karte anzeigt.

## Revendications

1. Système de fonctionnement pour un véhicule électrique de mobilité personnelle (20), le système de fonctionnement comprenant :
un serveur de fonctionnement (10) connecté à un système de communication (11) et comprenant une base de données cartographique (15) qui inclut des liens définis pour des zones de circulation piétonne comprenant des trottoirs ; et
un véhicule électrique de mobilité personnelle (20) qui est adapté pour se connecter au serveur de fonctionnement (10) par l'intermédiaire du système de communication (11), et qui présente un mode de conduite autonome pour se déplacer en suivant un itinéraire prédéterminé et un mode de conduite manuelle pour se déplacer sous la commande de l'utilisateur,
le serveur de fonctionnement (10) comprend une partie génération d'itinéraire (13) qui génère une pluralité d'itinéraires de déplacement sur la base des données dans la base de données cartographique (15), en réponse à une demande d'envoi provenant d'un terminal de communication utilisateur (41) connecté par l'intermédiaire du système de communication (11), les itinéraires de déplacement comprennent un premier itinéraire de déplacement par conduite sans conducteur allant d'un emplacement actuel du véhicule (20) à un emplacement de prise en charge pour un utilisateur (40) associé au terminal de communication utilisateur (41) et un second itinéraire de déplacement par conduite avec conducteur allant de l'emplacement de prise en charge pour l'utilisateur (40) à un emplacement de destination,
le serveur de fonctionnement (10) est configuré pour effectuer un téléchargement des itinéraires de déplacement sur le terminal de communication utilisateur (41) via le système de communication (11),
dispose d'une fonction d'assistance à la rencontre qui donne une notification d'arrivée au terminal de communication utilisateur (11) lorsque le véhicule (20) est conduit par conduite sans conducteur sur le premier itinéraire de déplacement et arrive à l'emplacement de prise en charge pour l'utilisateur,
**caractérisé en ce que**
à la fois des liens directs et des liens inverses sont définis pour les trottoirs dans la base de données cartographique (15) ;
le premier itinéraire de déplacement et le second itinéraire de déplacement sont générés par la partie génération d'itinéraire (13) de sorte que le déplacement en conduite autonome ne comprend pas de liens inverses sur le trottoir, et le déplacement en conduite manuelle comprend des liens inverses sur le trottoir, et
la partie génération d'itinéraire (13) est en outre configurée, si la longueur de l'itinéraire et la durée nécessaire sont raccourcies en modifiant l'emplacement de prise en charge désignés par l'utilisateur (40), pour générer un itinéraire de déplacement candidat comprenant une modification de l'emplacement de prise en charge, et pour présenter l'itinéraire de déplacement candidat, comprenant une durée estimée nécessaire de l'itinéraire de déplacement candidat, sur le terminal de communication utilisateur (41).

2. Système de fonctionnement pour un véhicule électrique de mobilité personnelle (20) selon la revendication 1, dans lequel la fonction d'assistance à la rencontre comprend une fonction qui donne une notification d'approche de l'emplacement de prise en charge au terminal de communication utilisateur (41) lorsque le véhicule (20) s'est approché à une distance prédéterminée de l'emplacement de prise en charge.

3. Système de fonctionnement pour un véhicule électrique de mobilité personnelle (20) selon la revendication 2, dans lequel la fonction d'assistance à la rencontre comprend une fonction qui affiche la distance relative entre l'emplacement de prise en charge et le terminal de communication utilisateur (41), ou un signal correspondant à celle-ci, sur le terminal de communication utilisateur (41).

4. Système de fonctionnement pour un véhicule électrique de mobilité personnelle (20) selon la revendication 1, dans lequel la fonction d'assistance à la rencontre comprend une fonction qui affiche une image de caméra ou une image d'environnement du véhicule (20) sur le terminal de communication utilisateur (41) lorsque le véhicule (20) a parcouru le premier itinéraire de déplacement jusqu'à au moins une distance prédéterminée de l'emplacement de prise en charge.

5. Système de fonctionnement pour un véhicule électrique de mobilité personnelle (20) selon la revendication 1, dans lequel la fonction d'assistance à la rencontre comprend une fonction qui affiche, sur le terminal de communication utilisateur (41), une carte d'une zone proche de l'emplacement de prise en charge et des emplacements actuels du terminal de communication utilisateur (41) et du véhicule (20) concerné sur la carte.
